(19)

Europäisches
Patentamt
European
Patent Office
Office européen
des brevets

(11) **EP 2 296 029 A1**

(12) **EUROPEAN PATENT APPLICATION**
published in accordance with Art. 153(4) EPC

(43) Date of publication:
**16.03.2011 Bulletin 2011/11**

(21) Application number: **09770089.2**

(22) Date of filing: **19.06.2009**

(51) Int Cl.:
*G02B 27/22* (2006.01)      *H04N 13/04* (2006.01)

(86) International application number:
**PCT/JP2009/061183**

(87) International publication number:
**WO 2009/157379 (30.12.2009 Gazette 2009/53)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.06.2008 JP 2008166022**

(71) Applicant: **Sony Corporation Tokyo 108-0078 (JP)**

(72) Inventors:
• **YAMADA Masahiro Tokyo 108-0075 (JP)**
• **AOKI Sunao Tokyo 108-0075 (JP)**

(74) Representative: **Thévenet, Jean-Bruno et al Cabinet Beau de Loménie 158, rue de l'Université 75340 Paris Cédex 07 (FR)**

(54) **SPATIAL IMAGE DISPLAY APPARATUS**

(57)      Stereoscopic display with high definition compared with in the past may be easily realized. A lenticular lens 2 is disposed such that a longitudinal direction of each cylindrical lens 2A is parallel to an axis in a vertical direction Y of a two-dimensional display section 1. In addition, a plurality of beams corresponding to a plurality of view angles are radiated into a space by means of surface segmentation at a time, and a relative positional relationship between each cylindrical lens 2A and each pixel of the two-dimensional display section 1 is periodically changed, so that a radiation direction of display image light from one pixel through each cylindrical lens 2A is periodically displaced. Images corresponding to one frame of a three-dimensional video image are time-divisionally displayed for each pixel of the two-dimensional display section 1, and a timing of time division display of the two-dimensional display section 1 and a timing to change the relative positional relationship by displacement means are controlled to be synchronized with each other. Thus, stereoscopic display using a combination of a surface segmentation method and a time division method is performed, and consequently stereoscopic display with high definition compared with in the past is realized.

FIG. 6

EP 2 296 029 A1

**Description**

TECHNICAL FIELD

The present invention relates to an apparatus that forms a three-dimensional spatial image by radiating a large number of multiple beams corresponding to multiple view angles into a space, and particularly relates to a spatial image display apparatus having at least a two-dimensional display device and a lenticular lens.

BACKGROUND ART

A twin-lens stereoscopic display apparatus has been known in the past, which realizes stereoscopic vision by presenting an image with parallax to both eyes of a viewer. As stereoscopic sensing functions of humans, four functions of binocular parallax, convergence, physiological adjustment, and motion parallax are known. In the twin-lens apparatus, binocular parallax is satisfied, but other sensing functions are often discrepant or inconsistent in recognition. Such discrepancy or inconsistency may not occur in the real world, causing confusion in human brain and fatigue.

Thus, a spatial image system is being developed as a method of achieving more natural stereoscopic vision. In the spatial image system, a plurality of beams having different radiation directions are radiated into a space, and therefore a spatial image corresponding to a plurality of view angles is formed. The spatial image system may satisfy binocular parallax, convergence, and motion parallax between the stereoscopic sensing functions of humans. Particularly, if images suitable for extremely finely divided view angles may be displayed in a space, the method may satisfy all the stereoscopic sensing functions including the physiological adjustment as a human focusing function, leading to a feeling of a natural stereoscopic image. As a method of forming the spatial image, "time division display method" is known, in which images corresponding to a plurality of view angles are displayed while being changed at high speed in a time division manner. As a measure to achieve the time division display method, for example, a system using a micro deflecting mirror array formed by using MEMS (MicroElectroMechanical System) technology is known. In the system, time-divided image light is deflected in synchronization with change timing of images by the micro deflecting mirror array.

As another spatial image system, a system is known, which includes a combination of a two-dimensional display device such as a liquid crystal display and a lenticular lens (see non-patent documents 1 and 2 and patent documents 1 and 2). In the system, images corresponding to a plurality of view are loaded a In the system, images corresponding to a plurality of view angles are loaded at a time into one display surface of the two-dimensional display device and displayed at a time, and the images corresponding to the view angles are deflected in an appropriate direction and radiated via the lenticular lens, so that a spatial image corresponding to the plurality of view angles are formed. In such a method, unlike the time division method, images corresponding to a plurality of view angles are divided in one display surface and displayed at a time, and therefore the method is called "surface segmentation method".

The lenticular lens includes, for example, a plurality of cylindrical lenses that are arranged side by side such that respective cylindrical axes (central axes) of the lenses are roughly parallel to one another and thus the lenticular lens as a whole has a sheet shape. In the surface segmentation method, the cylindrical lenses configuring the lenticular lens are disposed such that a focal plane of each cylindrical lens corresponds to a display surface of the two-dimensional display device. In the most simple combination method of the two-dimensional display device and the lenticular lens, the cylindrical axes of the cylindrical lenses are set parallel to a vertical direction of the two-dimensional display device. In the case of the method, since the display surface of the two-dimensional display device is typically configured of a large number of pixels arranged in a horizontal direction and a vertical direction, a predetermined number of pixels arranged in the horizontal direction are set in correspondence to one cylindrical lens so that "three-dimensional pixel" is configured. The three-dimensional pixel is a unit of pixels for displaying a spatial image, and a pixel group including a predetermined number of pixels of the two-dimensional display device is set as one three-dimensional pixel. Since a horizontal distance from a cylindrical axis of each cylindrical lens to each pixel determines a horizontal advance direction (deflection angle) of light emitted from the relevant pixel after passing through the cylindrical lens, the same number of horizontal display directions as the number of horizontal pixels used as a three-dimensional pixel are obtained, Regarding such a configuration method, the following problem is pointed out: when the number of horizontal display directions is increased, resolution in a horizontal direction of three-dimensional display is extremely reduced, and besides imbalance in resolution occurs between horizontal and vertical directions. To solve the problem, patent document 1 proposes a method of arranging cylindrical axes of cylindrical lenses obliquely to a vertical direction of the two-dimensional display device.

FIG. 13(A) shows an example of the display method proposed in the patent document 1. In FIG. 13(A), a two-dimensional display device 101 has a plurality of pixels 102 of three colors, R, G and B. The pixels 102 are arranged with the same color in a horizontal direction, and arranged in a vertical direction such that three colors, R, G and B, periodically appear. A lenticular lens 103 has a plurality of cylindrical lenses 104. The lenticular lens 103 is disposed obliquely to a vertical arrangement direction of the pixels 102. In the display method, M*N pixels 102 in total, including M pixels in the horizontal direction and N pixels in the vertical direction, configure one three-dimensional pixel, and thus M*N horizontal display directions are achieved. When an inclination angle of the lenticular lens 103 is denoted by θ, and θ=tan$^{-1}$(px/Npy) is given, horizontal distances with respect to a cylindrical axis of a cylindrical lens 104 may be set to different values for all pixels 102 in a three-dimensional pixel. Here, px shows a pitch in a horizontal direction of each color pixel 102, and py shows a pitch in a vertical direction of each color pixel 102.

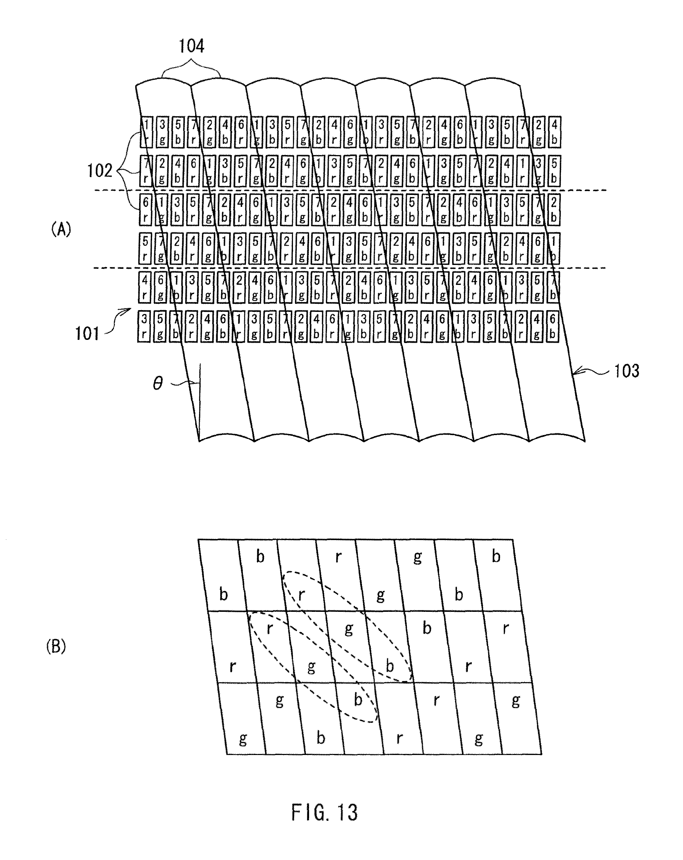

In the example of FIG. 13(A), N=2 and M=7/2 are assumed, and seven pixels 102 are used to configure one three-dimensional pixel, and seven horizontal display directions are thus achieved. In FIG. 13(A), numbers 1 to 7 marked to the pixels 102 show that the pixels are corresponding to the seven horizontal display directions. In this way, it has been proposed that the lenticular lens 103 is obliquely used, thereby one three-dimensional pixel may be configured not only by using pixels 102 in the horizontal direction but also by using pixels 102 in the vertical direction, and thus reduction in resolution in a horizontal direction of three-dimensional display is suppressed, and consequently resolution balance between horizontal and vertical directions may be improved.

However, in the display method shown in FIG. 13(A), only one color pixel 102 is set in correspondence to one horizontal display direction for one three-dimensional pixel, Therefore, three primary colors, R, G and B, may not be displayed at a time in one horizontal display direction in one three-dimensional pixel. Therefore, three three-dimensional pixels are combined to display the three primary colors, R, G and B, in one horizontal display direction. In FIG. 13(B), display colors in a fourth horizontal display direction among the seven horizontal display directions are shown for each three-dimensional pixel. As shown in FIG. 13(B), three three-dimensional pixels are combined in an oblique direction and used, and therefore three primary colors, R, G and B, are displayed at a time in one horizontal display direction, so that full-color display is achieved. Regarding the display method, the following problem is pointed out: since a display color of a three-dimensional pixel is changed depending on horizontal display directions, color shading occurs in a three-dimensional image. Furthermore, the display method has the following problem: since maximum intensity is changed with respect to a horizontal display direction depending on structures of respective color pixels 102, unevenness in intensity in a horizontal direction occurs in a retinal image. The patent document 2 proposes a method of solving the problems of the display method described in the patent document 1 by designing arrangement of the pixels 102 or the inclination angle θ of the lenticular lens 103.

CITATION LIST

Non-patent documents

Non-patent document 1
Yuzo Hirayama, "Flatbed-Type Autostereoscopic Display System", KOGAKU, 35, 2006, pp.416-422.
Non-patent document 2
Y. Takaki, "Density Directional Display for Generating Natural Three-dimensional Images", Proc. IEEE, 2006, 94, pp.654-663.

Patent documents

Patent documents 1
US Patent No. 6,064,424.
Patent document 2
Japanese Unexamined Patent Application Publication No. 2005-309374.

**SUMMARY OF INVENTION**

However, a spatial image display apparatus using the time division method in the past has a problem: a large display apparatus is hardly achieved in terms of cost or productivity. Furthermore, the display apparatus has another problem: for example, when a micro deflecting mirror array is used, individual micro mirrors need to be independently controlled with extremely high accuracy in order to synchronously deflect all micro mirrors with high accuracy, leading to difficult control.

Moreover, a spatial image display apparatus using the surface segmentation method in the past is **characterized in that** three-dimensional data (images corresponding to many view angles) are loaded at a time into a display surface of a two-dimensional display device. Three-dimensional data are loaded into a limited number of pixels of the two-dimensional display device, and therefore resolution of a three-dimensional image (spatial image) to be displayed is necessarily reduced compared with maximum resolution of a two-dimensional image displayed by the two-dimensional display device. In addition, as a viewable region of a spatial image is intended to be increased, or as a more natural and smooth spatial-image is intended to be displayed in correspondence to motion of a viewer resolution is problematically extremely reduced compared with resolution of the two-dimensional display device. To avoid this, instead of loading all three-dimensional data at a time into the two-dimensional display device, the following method is considered: images on the two-dimensional display device, the images being loaded with three-dimensional data slightly different from one another are displayed in a time division manner while being changed at high speed in terms of an integration effect of human eyes. This is a display method using a combination of the time division method and the surface segmentation method. However, a specific method to achieve the display method has not been developed yet.

In the case of the method where a cylindrical axis of each cylindrical lens is obliquely disposed with respect to a vertical direction of a two-dimensional display device, apparent size of a pixel with respect to size of a cylindrical lens is increased compared with a case that the cylindrical axis is disposed parallel to the vertical direction. In this case, a divergent angle of beams radiated from one pixel via a cylindrical lens is increased. When many beams are radiated into a space to display a spatial image, each beam needs to be thin and small in divergent angle in order to display a spatial image being less blurred. Therefore, the method where the cylindrical lenses are obliquely disposed has a problem of blurring of a displayed spatial-image.

The invention has been made in the light of the problems, and an object of the invention is to provide a spatial image display apparatus, which may easily realize stereoscopic display with high definition compared with in the past.

A spatial image display apparatus of the invention includes a two-dimensional display section having a plurality of pixels of p kinds of colors (p is an integer of 1 or more) which are two-dimensionally arranged on a lattice in vertical and horizontal directions so as to form a planar display surface, pixels of an identical color being arranged in the vertical direction, and pixels of the p kinds of colors cyclically arranged in the horizontal direction so that pixels of an identical color are arranged at regular intervals; a lenticular lens including a plurality of cylindrical lenses disposed side by side so that the lenticular lens as a whole is configured into a sheet shape and is disposed facing the display surface of the two-dimensional display section, the cylindrical lenses allowing display image light, which comes from each pixel of the two-dimensional display section, to be deflected and radiated into a space; displacement means reciprocating to displace one or both of the lenticular lens and the two-dimensional display section in a plane parallel (roughly parallel) to the display surface so as to periodically change a relative positional relationship between each cylindrical lens and each pixel of the two-dimensional display section, and thereby periodically changing a radiation direction of display image light from one pixel through each cylindrical lens; and control means performing control of allowing the two-dimensional display section to display images corresponding to one frame of three-dimensional video image in a time division manner, and performing control of synchronizing a time-division display timing in the two-dimensional display section with a timing to change the relative positional relationship by the displacement means, wherein the lenticular lens is disposed such that a longitudinal direction of each cylindrical lens or a direction of a boundary between adjacent cylindrical lenses is parallel (roughly parallel) to an axis in a vertical direction of the two-dimensional display section.

In the spatial image display apparatus of the invention, certain components, being formed to be perpendicular or parallel to each other, need not be strictly perpendicular or parallel to each other, but may be roughly perpendicular or parallel within a scope of satisfying target display quality. For example, shift in angle in a level of manufacturing error is allowable. In the spatial image display apparatus of the invention, "cylindrical lens" need not be a completely cylindrical lens, and can be a roughly cylindrical lens. For example, a shape of a section in a direction of refracting power of the lens is not necessarily limited to a completely circular (arcuate) shape, and may be a noncircular shape. For example, in the consideration of lens aberration, the section may have a noncircular shape formed by intentionally deforming a circular shape. Furthermore, the cylindrical lens may be a, for example, GRIN (GRaded-INdex) lens formed by adding distribution to its refractive index to have a lens effect.

In the spatial image display apparatus of the invention, the two-dimensional display section having a plurality of pixels of p kinds of color is appropriately combined with the lenticular lens, so that a plurality of beams corresponding to a plurality of view angles are radiated at a time into a space by means of surface segmentation. Particularly, the lenticular lens is disposed such that a longitudinal direction of each cylindrical lens or a direction of a boundary between adjacent cylindrical lenses is parallel to an axis in a vertical direction of the two-dimensional display section, and therefore a divergent angle of beams radiated from a pixel via a cylindrical lens is reduced compared with a case that the cylindrical lenses are obliquely disposed. Thus, a spatial image being less blurred is displayed. In the spatial image display apparatus of the invention, a relative positional relationship between each cylindrical lens and each pixel of the two-dimensional display section is periodically changed, and therefore a radiation direction of display image light from one pixel through each cylindrical lens is periodically displaced. In addition, images corresponding to one frame of a three-dimensional video image are time-divisionally displayed for each pixel of the two-dimensional display section, and a timing of time division display of the two-dimensional display section and a timing to change the relative position by the displacement means are controlled to be synchronized with each other. In other words, the spatial image display apparatus of the invention uses a combination of the surface segmentation method and the time division method for stereoscopic display. Thus, stereoscopic display with high definition compared with in the past is realized.

In the spatial image display apparatus of the invention, the displacement means preferably reciprocates the lenticular lens or the two-dimensional display section in a direction parallel (roughly parallel) to a horizontal direction of the two-dimensional display section. The control means preferably displace a relative position xi between each cylindrical lens and each pixel of the two-dimensional display section according to the relational expression (1) as shown below with a pixel pitch px for each color in a horizontal direction of the two-dimensional display section and a relative reference position x0 between the lenticular lens and the two-dimensional display section, and preferably performs control synchronizing timing of time division display of the two-dimensional display section with a timing of displacing the relative position according to the relational expression (1). The relational expression need not be strictly satisfied, but may be roughly satisfied within a scope of satisfying target display quality.

$$xi = a0 * i + x0,$$

wherein

i=0, ..., (mp-1) (m is an integer of 1 or more),

$$a0 = px/m \qquad : \quad (1).$$

Appropriate control is performed so as to satisfy such a predetermined relational expression, and therefore unevenness in intensity of brightness and color shading of a spatial image may be suppressed, leading to excellent spatial image display.

According to the spatial image display apparatus of the invention, the lenticular lens is disposed such that a longitudinal direction of each cylindrical lens or a direction of a boundary between adjacent cylindrical lenses is parallel to an axis in a vertical direction of pixel arrangement of the two-dimensional display section, and a plurality of beams corresponding to a plurality of view angles are radiated into a space by means of surface segmentation, and therefore a divergent angle of beams radiated from one pixel may be reduced compared with a case that each cylindrical lens is obliquely disposed, and consequently a spatial image being less blurred may be displayed. Moreover, according to the spatial image display apparatus of the invention, a relative positional relationship between each cylindrical lens of the lenticular lens and each pixel of the two-dimensional display section is periodically changed, so that a radiation direction of display image light from one pixel through each cylindrical lens is periodically displaced, and therefore images corresponding to one frame of a three-dimensional video image are time-divisionally displayed for each pixel of the two-dimensional display section, and therefore stereoscopic display using a combination of the surface segmentation method and the time division method may be realized. In this case, since the lenticular lens or the two-dimensional display section is wholly moved and thus time division display is achieved, synchronization control is easily performed, for example, compared with a case that synchronization control is independently performed to individual micromirrors of a micro deflection mirror array in a time division manner. Thus, stereoscopic display with high definition compared with in the past may be easily realized.

BRIEF DESCRIPTION OF THE DRAWINGS

FIG. 1 is an outline view showing a schematic configuration of a spatial image display apparatus according to an embodiment of the invention, together with a state of beams radiated from one three-dimensional pixel.
FIG. 2 is an explanatory diagram showing the beams shown in FIG. 1 as viewed from a top side.
FIG. 3 is a block diagram showing a general configuration of the spatial image display apparatus according to the embodiment of the invention.
FIG. 4 is a schematic diagram for illustrating an example of a method of generating a video signal.
FIG. 5 is an explanatory diagram showing a configuration example of pixels of a two-dimensional display section and a layout example of a lenticular lens of the spatial image display apparatus according to the embodiment of the invention.
FIG. 6 is an explanatory diagram showing, with a red pixel being focused, a first operation example of relative movement between the two-dimensional display section and the lenticular lens in a three-dimensional one-frame period in a time division manner.

FIG. 7 is an explanatory diagram showing a display state at timing T6 of FIG. 6 in detail.

FIG. 8 is an explanatory diagram showing, with a red pixel being focused, a second operation example of relative movement between the two-dimensional display section and the lenticular lens in a three-dimensional one-frame period in a time division manner.

FIG. 9 is explanatory diagrams showing the amount of relative displacement between the two-dimensional display section and the lenticular lens and timing of such relative movement, wherein (A) shows a first operation example, (B) shews a second operation example, and (C) shows a third operation example.

FIG. 10 is a bird's eye view (A) and a side section view (B) for illustrating a deflection angle of beams from one emission point (pixel).

FIG. 11 is an explanatory diagram showing that color shading is suppressed by the spatial image display apparatus according to the embodiment of the invention.

FIG. 12 is explanatory diagrams showing difference in light intensity of radiated beams due to difference in layout direction of cylindrical lenses, wherein (A) shows a case that a cylindrical axis of each cylindrical lens is in a vertical direction, and (B) shows a case that the cylindrical axis is in an oblique direction.

FIG. 13 is diagrams, wherein (A) is a plan diagram showing an example of a stereoscopic display apparatus in the past including a combination of a two-dimensional display device and a lenticular lens, and (B) is an explanatory diagram showing a state of pixels displayed in a particular display direction.

DESCRIPTION OF EMBODIMENTS

Hereinafter, a preferred embodiment of the invention will be described in detail with reference to drawings.

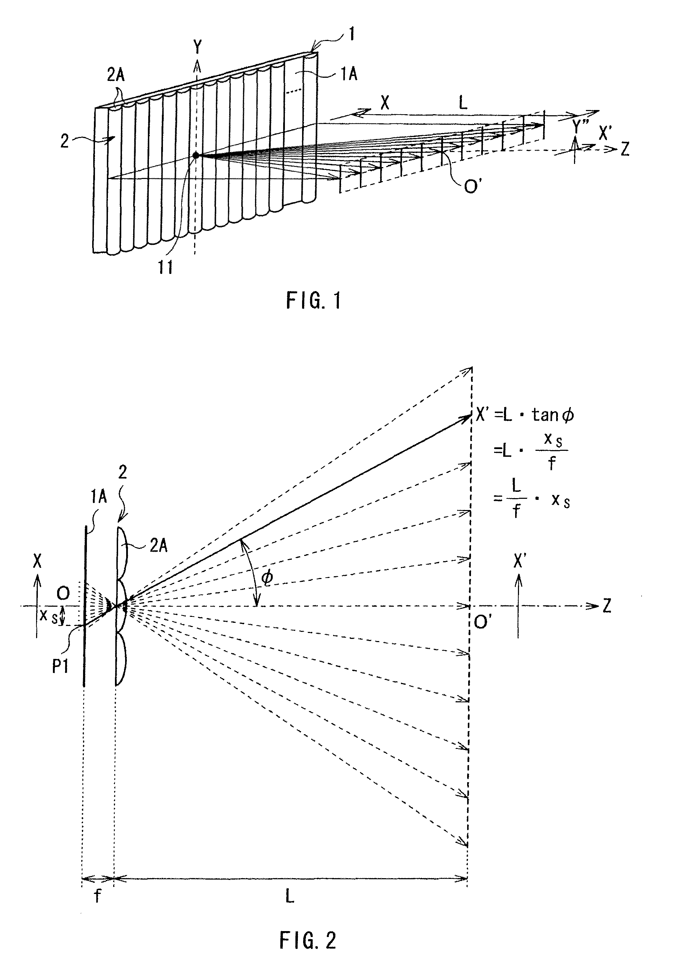

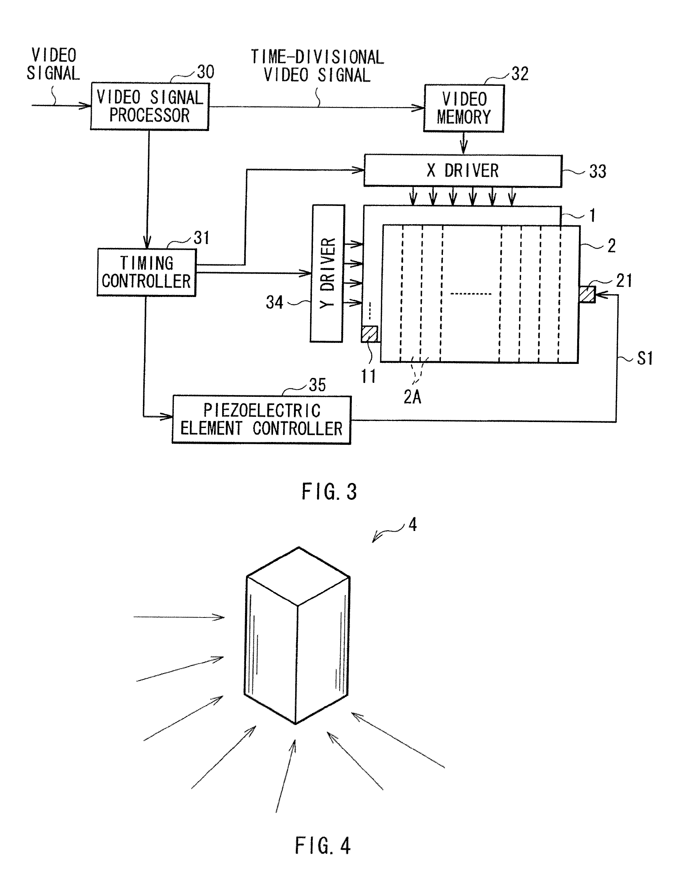

FIG. 1 shows a schematic configuration of appearance of a spatial image display apparatus according to an embodiment of the invention. FIG. 1 further shows a state of beams radiated from a pixel (three-dimensional pixel 11). FIG. 2 shows a state of the beams as viewed from a top side. FIG. 3 shows a general configuration including circuit elements of the spatial image display apparatus according to the embodiment.

The spatial image display apparatus according to the embodiment has a two-dimensional display device and a lenticular lens 2. The two-dimensional display device has a two-dimensional display section 1 including a display device such as a liquid crystal display panel. The lenticular lens 2 is generally formed into a sheet shape as a whole with a plurality of cylindrical lenses 2A being arranged side by side so that cylindrical axes of the lenses are roughly parallel to one another. The lenticular less 2 is disposed facing a display surface 1A of the two-dimensional display section 1 so that the lenticular lens as a whole is roughly parallel to the display surface. In addition, the lenticular less 2 is disposed facing the display surface 1A of the two-dimensional display section 1 so that a focal plane of each cylindrical lens 2A corresponds to the display surface 1A. In addition, the lenticular lens 2 is disposed such that a cylindrical axis of each cylindrical lens 2A is parallel to a vertical direction (Y direction) of the two-dimensional display section, 1. The lenticular lens 2 deflects display image light from the two-dimensional display section 1 and radiates the deflected light for each pixel.

In the two-dimensional display section 1, a plurality of pixels 10 of p kinds of color (p is an integer of 1 or more) are provided, and the pixels 10 are two-dimensionally arranged on a lattice in vertical (Y) and horizontal (X) directions roughly perpendicular to each other, and thus a planar display surface 1A is formed. Moreover, in the two-dimensional display section 1, a plurality of pixels 10 of an identical color are arranged in a vertical direction, and a plurality of pixels 10 of p kinds of color are cyclically arranged in a horizontal direction so that pixels of an identical color are arranged at regular intervals, For such a two-dimensional display section 1, for example, a liquid crystal display device may be used. The liquid crystal display device has a structure where pixel electrodes formed in the respective pixels 10 are interposed between a pair of glass substrates (not shown). In addition, a liquid crystal layer and the like (not shown) are provided between the pair of glass substrates. Alternatively, as the two-dimensional display device having the two-dimensional display section 1, a stripe-type display including a plasma display, an organic EL display, or a projection display is suitable. In the embodiment, Since a higher frame rate than typical 30 or 60 Hz is preferably used as a frame rate of video display on the two-dimensional display section 1, a display, which may display images even at a high frame rate, is desirable.

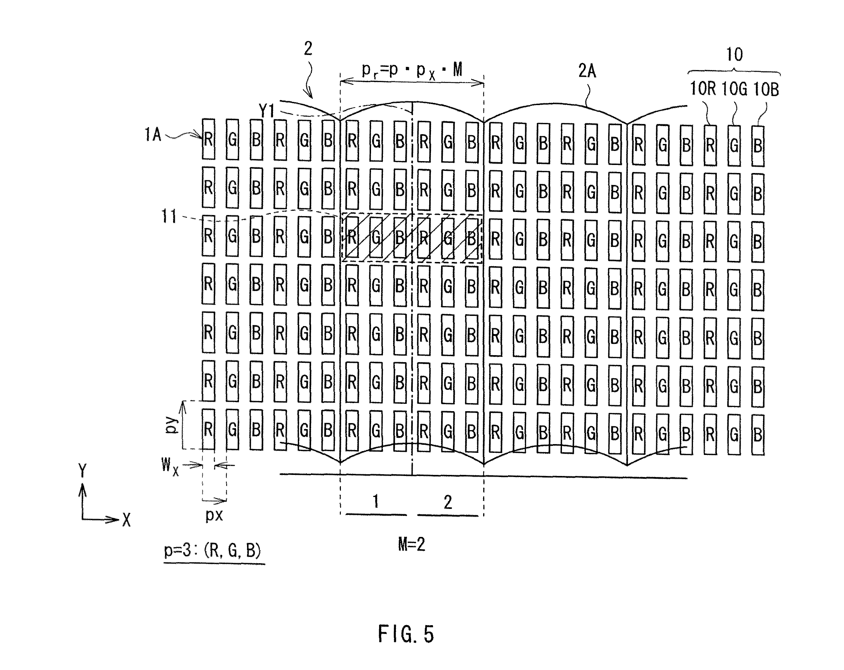

FIG. 5 more specifically shows a configuration example of the pixels 10 of the two-dimensional display section 1 and a layout example of the lenticular less 2. The two-dimensional display section 1 and the lenticular lens 2 are disposed such that a direction (Y direction) of a vertical array including one-color pixels 10 of the two-dimensional display section 1 is parallel to a cylindrical axis Y1 of the lenticular less 2.

In the example of FIG. 5, each pixel 10 of the two-dimensional display section 1 is configured of three kinds (p=3), R (red), G (green) and B (blue), of pixels 10R, 10G and 10B. In FIG. 5, px denotes a pixel pitch for each color in a horizontal direction (X direction) of the two-dimensional display section 1, and py demotes a pixel pitch for each color in a vertical direction (Y direction) thereof. In the embodiment, "three-dimensional pixel" is a unit of pixels for displaying a spatial image, and a pixel group including a predetermined number of pixels of the two-dimensional display section 1 is set as one three-dimensional pixel. More specifically, a pixel group of p*M (M is an integer of 1 or more) pixels including one pixel in the vertical and p*M pixels 10 in the horizontal direction is set as the three-dimensional pixel. When a spatial image is displayed, the three-dimensional its the smallest among for the image. In the embodiment, the number v0 of beams, which are radiated from one three-dimensional pixel at a with radiation directions different one another, satisfies:

$$v0 = M * p.$$

In the example of FIG. 5, M=2 is set in the horizontal direction. In the embodiment, a pitch of the lenticular lens 2 is preferably to in the X direction of the three-dimensional pixel 11. in other worlds, a pitch pr in the X direction of each cylindrical lens 2A of the lenticular lens 2 preferably has a value satisfying:

$$pr = p * px * M.$$

The relational expression not be strictly but may be roughly satisfied within a scope of satisfying target display quality.

In the embodiment, the lenticular lens 2 has a configuration where equivalent cylindrical lenses 2A are arranged side by side with certain intervals. Furthermore, in the the tents 2 is desirably such that a focal point of each cylindrical lens 2A corresponds to the display surface 1A of the two-dimensional display section 1. However the lenticular lens 2 may be disposed while being intentionally displaced and from a focal plane. The of such displacement, detail of its omitted, largely depends on, for example, an integral imaging our a multi view method is used as a method of a spatial image display apparatus. The display surface 1A refers to a on which a color for liquid crystal is disposed, of a liquid crystal display, or a light emitting surface of an organic EL display or a plasma and a screen of a projection display.

the cylindrical lens 2A is described to be a lens having a cylindrical axis Y1 in the the lens 2A not be completely cylindrical but may be a roughly cylindrical lens, In the the cylindrical lens 2A has a semicylindrical of the section has a curved portion having a roughly circular (arcuate) shape. However, for example, in the consideration of lens a section in a direction of refracting power of the lens 2A may hale a noncircular shape formed by intentionally deforming a circular shape. Furthermore, the cylindrical lens 2A may be, for example, a GRIN tens formed by adding distribution to its refractive index to have a lens effect. A typical lenticular lens 2 has a semicylindrical shape having a planar surface on one side. However, when the lenticular lens 2 may be disposed adjacently to the display surface 1A, the surface on_ the ones may be a curved surface having a roughly circular section instead of a planar surface. In such a ease, for example, in the case of a projection display, the display surface 1A corresponds to a screen, and a surface of the screen is typically uncovered in most cases, the lenticular lens 2 may be disposed adjacently to the display surface 1A. In each case, it is enough that the lenticular lens 2 is disposed such that a longitudinal direction of each cylindrical lens 2A or a direction of a boundary between adjacent cylindrical lenses is parallel to an axis in the vertical direction Y of the two-dimensional display section 1. When the cylindrical lens 2A is a completely cylindrical lens, "longitudinal direction" or "boundary direction" described herein is the same as a direction of the cylindrical axis (central axis in a longitudinal direction) Y1 of the cylindrical lens 2A

In the embodiment, when an image viewer views a spatial image from the spatial image display apparatus, the viewer desirably views the image in such a posture that a direction of a line connecting between both eyes of the viewer is roughly perpendicular to the vertical direction Y of the two-dimensional display section 1. However, such a posture is a usual posture for watching a display such as a television unless the viewer is lying, and therefore the viewer is not required to take a particular posture.

The spatial image display apparatus according to the embodiment has displacement means reciprocating to displace one or both of the lenticular lens 2 and the two-dimensional display section 1 in a plane roughly parallel to the display surface 1A, and therefore periodically changes a relative positional-relationship between each cylindrical lens 2A and each pixel 10 of the two-dimensional display section 1, and therefore periodically displaces a radiation direction of display image light one pixel 10 by each cylindrical lens 2A. In the spatial image display apparatus has control means that performs control such that images corresponding to one frame of a three-dimensional video are time-divisionally for each pixels 10 of the two-dimensional display section 1, and performs control of synchronizing timing of time division display of the two-dimensional display section 1 with two the relative position by the displacement means.

PIG. 3 shows circuit for the control. As shown in FIG. 3, the spatial image display apparatus has an X driver (data driver) 33 supplying a drive voltage own a video signal to each pixel 10 in the two-dimensional display suction 1, a Y driver (gate driver) 34 line-sequentially driving each pixel 10 in the two-dimensional display section 1 along a not-shown scan line, a timing controller (timing generator) 31 controlling the X driver 33 and the Y driver 34, a video signal professor 30 (signal generator) processing a video signal from the outside to generate a time-divisional video signal, and a video memory 32 as a frame memory storing the time-divisional video signal from the video signal processor 30.

The video signal processor 30 generates a time-divisional video signal that is time-divisionally changed depending on a plurality of view angles (deflection angles) to one object based on the video signal supplied from the outside, and supplies the time-divisional video signal to the video memory 32. In addition, the video signal processor 30 supplies a predetermined control signal to the timing controller so that the X driver 33, the Y driver 34, and a piezoelectric element controller 35 operate in synchronization with change timing of the time-divisional video signal. Such a time-divisional video signal may be beforehand generated through taking an image of an imaging object 4 as a display object from various angles (corresponding to view angles), for example, as shown in FIG. 4.

Furthermore, the spatial image display apparatus has a piezoelectric element 21 corresponding to a specific example of the displacement means. While the piezoelectric element 21 is provided on the lenticular lens 2 in the example of FIG. 3, the piezoelectric element 21 may be provided on the two-dimensional display section 1 because the spatial image display apparatus is designed such that the lenticular lens 2 and the two-dimensional display section 1 can be relatively moved so as to displace a relative position between them. Alternatively, the piezoelectric 21 may be provided on or the lenticular lens 2 and the two-dimensional display section 1.

Furthermore, the spatial image display has the piezoelectric element controller 35 for controlling relative position displacement operation of the piezoelectric element 21. The piezoelectric element controller 35 supplies a control signal S1 for relative position displacement operation to the piezoelectric element 21 according to timing control by the timing controller 31. The timing controller 31 and the piezoelectric element controller 35 to a specific example of the control means.

piezoelectric element 21 is provided, for example, on a side face of the lenticular lens 2, and includes a piezoelectric material such as zirconate titanate (PZT). The piezoelectric element 21 the lenticular lens 2 so that a relative position between the two-dimensional display section 1 and the lenticular lens 2 reciprocates along an X-axis direction of an X-Y plane according to the control signal S1. Detail of such relative position displacement operation of the piezoelectric element 21 will be described later,

Next, operation of the spatial image display apparatus configured as above will be described.

In the spatial image display apparatus, as shown in FIG. 3, drive voltage (pixel application voltage) is supplied from the X driver 33 and the Y driver 34 to pixel electrodes based on a time-divisional video signal supplied from the video signal processor 30. Specifically, for example, when the two-dimensional display section 1 is a liquid crystal display device, the Y driver 34 applies a pixel gate pulse to gates of TFT elements corresponding to one horizontal line of the two-dimensional display section 1, and concurrently the X driver 33 applies pixel application voltage based on a time-divisional video signal to pixel electrodes corresponding to the one horizontal line. Thus, a backlight is modulated by a not-shown liquid crystal layer, so that display image light is emitted from each pixel 10 in the two-dimensional display section 1, as a result, a two-dimensional display image based on the time-divisional video signal is formed in a unit of the pixel 10.

The display image light radiated from the two-dimensional display section 1 is roughly converted into parallel beams by the lenticular lens 2 and then output. During such operation, based on the control signal S1 supplied from the piezoelectric element controller 35, the piezoelectric element 21 displaces a relative position the two-dimensional display section 1 and the lenticular lens 2 in the X-Y plane in to change of the time-divisional video signal. For example, the piezoelectric element 21 the relative position such that the lenticular lens 2 reciprocates the X-axis direction. Thus, whenever the time-divisional video signal is changes, a relative positional relationship the display section 1 and the lens 2 is in correspondence to a viewing angle of each viewer. Therefore, the display image light contains information about binocular parallax and an angle of convergence, and thus parallel beams of appropriate display image light are output depending on a viewing angle of a viewer (view and therefor a desired stereoscopic video its displayed depending on a viewing angle of a viewer.

In the spatial image display apparatus, since video signals (time-divisional video signals) corresponding to a plurality of view angles are time-divisionally changed with respect to one one two-dimensional image need not contain images corresponding to a plurality of view angles (deflection angles) the previous simple surface segmentation method, which minimizes in image quality (reduction in resolution) from image in the case of two-dimensional display, Moreover, the spatial image display apparatus may be manufactured without using MEMS or the like unlike in the past, the apparatus may be easily achieved. Furthermore, the spatial image display apparatus may be generally formed into a planar shape, leading to a compact (thin) configuration.

As as a of the embodiment, while a relative position the two-dimensional display section and the lenticular lens 2 is displaced, time-divisional images in synchronization with such displacement operation are projected from the two-dimensional display section 1 via the lenticular less 2 so that a spatial image is displayed.

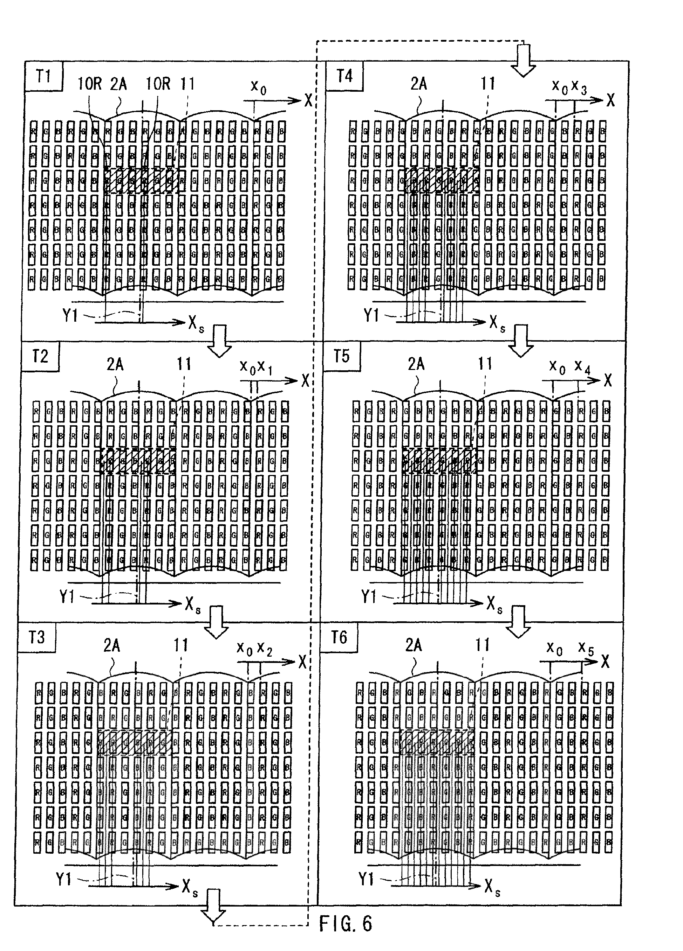

FIG. 6 shows timing as a guide for projecting (displaying) the time-divisional images from the two-dimensional display section 1. The timing to project the from the two-dimensional display section 1 its set for a relative position the two-dimensional display section and the lenticular lens 2. the timing is set for the relative the lenticular less 2 or the display surface 1A of the two-dimensional display section 1 may be actually moved. In the example of FIG. 6, the display surface 1A of the two-dimensional display section 1 is moved roughly parallel in the horizontal (X) direction with respect to the fixed lenticular lens 2. In the example of FIG. 6, each pixel of the two-dimensional display section 1 is configured of three kinds, or three primary-colors (R, G and B), of pixels 10R, 10G and 10B (p=3). A three-dimensional pixel 11 is configured of a pixel group of six pixels in total one pixel in a vertical direction and p*M=3*2 pixels in a horizontal direction.

First, as shown in T1 of FIG. 6, a to of the two-dimensional display section 1 is assumed to correspond to timing to an image the display section 1. According to the embodiment, when n*N is a whole number multiple of p in the relational expression (A), timing to project an image from the two-dimensional display section 1 at another position is determined according the expression (1) as shown below. The relational expression need not be strictly satisfied, but may be roughly satisfied within a scope of satisfying target display quality.

$$xi = a0 * i + x0,$$

wherein
i=0, ..., (mp-1) (m is an integer of 1 or more),

$$a0 = px/m \qquad : \qquad (1).$$

In the embodiment, the control means displaces a relative position xi between each cylindrical lens 2A and each pixel 10 of the two-dimensional display section 1 roughly according to the relational expression (1) with a relative reference position x0 between the lenticular lens 2 and the two-dimensional display section 1, and performs control of synchronizing timing of time division display of the two-dimensional display section 1 with a timing to displace the relative position according to the relational expression (1).

FIG. 6 clearly shows, using a case of the relational expression (1) as an example, various timing corresponding to the relative position x0 and other positions, at which images are projected from the two-dimensional display section 1, namely, clearly shows the expression (1) in terms of i in the expression in a table form, where a position of the two-dimensional display section 1 at each i is shown with a position of the lenticular lens 2 being fixed as a reference. FIG. 6 shows an example in the case of p=3, m=2, and M=2. Since m=2 is given, i=0, 1, 2, 3, 4 and 5 is given, as a result, a table of 3 rows and 2 columns is formed.

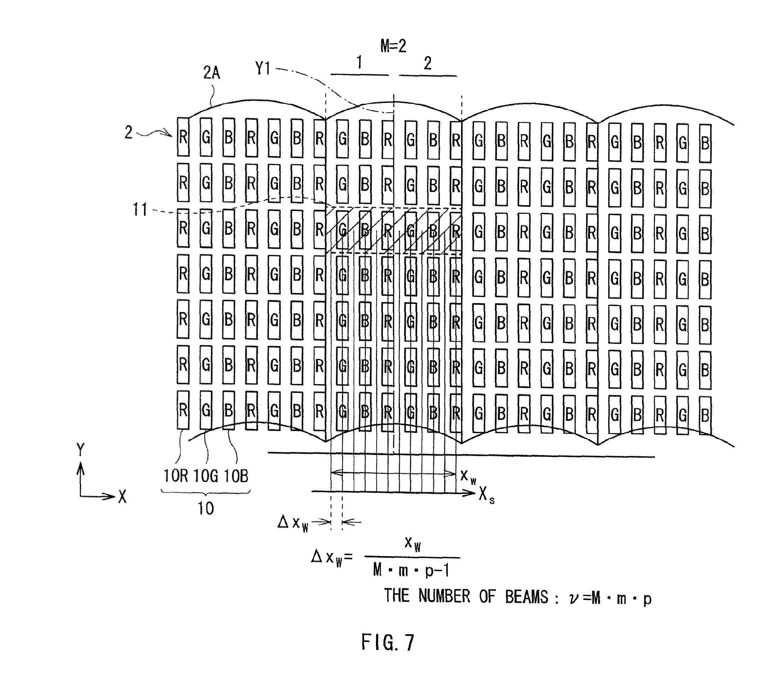

In FIG. 6, T1, T2, T3, T4, T5 and T6 show timing (time) to project images, respectively. In other words, the lenticular lens 2 is scanned (the relative position is in order of timing T1 T2, ...T6 in FIG. 6. In the example, a T1 to T6 is repeated to perform scan corresponding to one frame period of three-dimensional video display. FIG. 6 further includes formed in a way that an R pixel 10R of one three-dimensional pixel 11 is focused, and a distance between a pixel 10 and a central axis Y1 of the lenticular lens 2 is scanned on an Xs axis and plotted with a bar-line for each scan while of the scan is stored. When scan is for all a chart as in T6 is given. FIG. 7 shoes a state at the final timing T6 of FIG. 6 in an enlarged manner.

As understood from FIG. 7, according to the conditional expression (1) according to the embodiment, a distance relationship between a currently focused pixel 10 (here, R pixel 10R) of one three-dimensional pixel 11 and the central axis Y1 of the lenticular lens 2 is as follows: M*m*p distances are arranged with even intervals (Δxw) within a width xw on the Xs axis.

Description is made on a fact that distances are arranged on the Xs axis with even intervals as the distance relationship with respect to the central axis Y1 of the lenticular lens 2. Before the description, to help understanding, description is made on a relationship between a relative position of the lenticular lens 2 to an emission point P1 on the display surface 1A of the two-dimensional display section 1 and a deflection direction of a beam projected from the emission point P1.

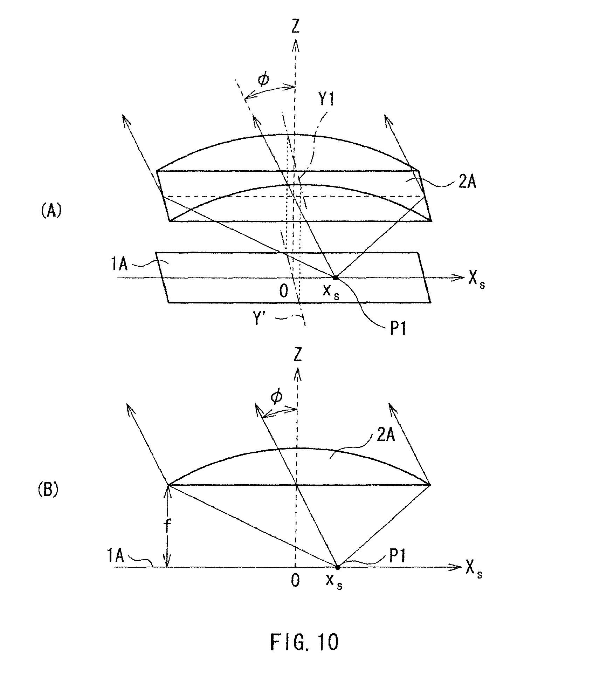

As shown in FIGS. 10(A) and 10(B), when the emission point P1 is disposed at a position (effective focal distance: f) of a focal distance of (a cylindrical lens 2A) of the lenticular lens 2, light from the emission point P1 is radiated in a direction perpendicular to the center line Y1 (cylindrical axis of the cylindrical lens 2A) of the lenticular lens 2 such that roughly parallel, beltlike beams are radiated in a direction of a deflection angle φ. When a central axis of the lenticular lens 2 is projected onto a Y'-Xs plane on which the emission point P1 exists (namely, the display surface 1A of the two-dimensional display section 1) and thus a projection line of the central axis is formed, and a distance from the emission point P1 to the projection line Y' is denoted by xs, a tangent of the deflection angle φ is roughly expressed by the following expression (2):

$$\tan\varphi = xs/f \quad ...... \quad (2).$$

The expression (2) reveals that a tangent of the deflection angle $\varphi$ is proportional to the distance xs from the emission point P1 to the projection line Y' of the center line Y1 on an point plane. FIG. 7 clearly the distance xs, In the the pixel 10 of the two-dimensional display section. 1 are in a lattice pattern in X and Y directions, the center line Y1 of the lenticular lent 2 is disposed parallel to a Y axis of the lattice. As shown in FIG. 7, the Xs is in a direction perpendicular to (the projection line Y') of the central axis Y1 of the lenticular less 2, and an origan O is disposed at a point where the center line of the lenticular lens 2 intersects with xs. This reveals the distance xs from each pixel 10 to the center line Y1 of the lenticular lent 2 corresponds to a distance from a perpendicular dropped from each pixel the Xs axis to the origin O on the Xs axis. A value of the distance xs is proportional to the tangent of the deflection angle $\varphi$.

When distances are arranged on the Xs axis with even intervals as the distance relationship with respect to the central axis Y1 of the lenticular lens 2, as understood from the expression (2), since the tangent of the deflection angle $\varphi$ is proportional to xs, tangents of deflection angles $\varphi$ are also arranged with even intervals as a result of the scan. In other words, when an image is projected from the two-dimensional display section 1 at a timing determined in the embodiment, tangents of deflection angles $\varphi$ of beams, the beams being projected from a particular kind of pixel 10 (here, R pixel 10R) of one three-dimensional pixel formed on one two-dimensional display section 1, are arranged by M*m*p with even intervals. Such a number corresponds to the number of beams $\nu$ having different radiation directions radiated from one three-dimensional pixel 11 during one frame period of three-dimensional video display, or corresponds to the number of visual points generated by one three-dimensional pixel during one frame period of three-dimensional video display.

Such an aspect is shown in FIGS. 1 and 2. FIGS. 1 and 2 show an aspect of beams radiated from a particular kind of pixel 10 (for example, R pixel 10R) of one three-dimensional pixel 11 of a spatial image display apparatus. It is assumed that a spatial image is viewed at a place (on an X'-Y'' plane) with a certain distance L from the spatial image display apparatus, and a viewer may freely move parallel to a screen with the distance L being kept (while it is assumed that a viewer may move only right and left with the distance L being kept for convenience of description, it will be appreciated that the viewer may normally move front and back or right and left for viewing). A line (Z axis) perpendicular to the center line Y1 of the lenticular lens 2 and to the display lea of the two-dimensional display section. 1 is and a point at which the line intersects witch the display surface 1A and a point at the line intersects with a line along with a viewer moves are denoted by O and O', respectively. In the case that a particular kind of pixel 10 (for example, R pixel 10R) of the three-dimensional pixel 11 emits light at a relative position timing according to the embodiment, the lenticular less 2 is assumed to be stopped, emission points are arranged on an X axis with even intervals a shown in FIG. 2, and thus tangents of deflection angles $\varphi$ are arranged with even intervals according to the expression (2). A beam, which is radiated from an emission point P1 at a position with a distance xs from the print O, arrives at a point expressed by expression (3) as shown below, the point being separated by x' from the point O' on an X' axis of a viewer separated by L from the X axis. Hers, f is a focal distance (effective focal distance) of (the cylindrical lens 2A) of the lenticular lens 2.

$$x' = L*\tan\varphi = L*xs/f = xs*L/f \quad \ldots\ldots (3).$$

As understood from the expression (3), positions of emission points P1 on the X axis are arranged with even intervals, and correspondingly, when the beams arrive at the X' axis of a viewer separated by a distance L from the X axis, positions oaf arrival points are also arranged with even intervals. Since brightness of an image viewed from a viewer is proportional to the number of beams entering a pupil of an eye of a viewer, the fact that when the beams arrive at the X' axis, positions of arrival points are also arranged with even intervals means that light intensity is the same from any position on the X' axis at which a viewer is located, namely, unevenness in light intensity does not occurs. While consideration has been made with the R pixel 10R as an example, the same consideration is true for all kinds of pixels 10.

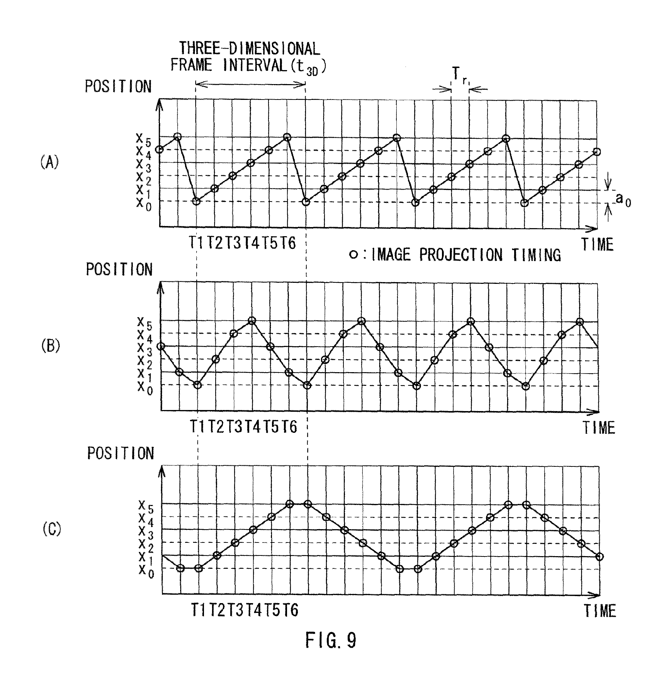

FIG. 9(A) shows a scan method for achieving the relative position timing shown in FIG. 6 in a time series. In the example of FIG. 9(A), operation of displacing a relative position in order of timing T1, T2, ... T6 in the charts of FIG. 6 is repeated. In the example, one cycle T1 to T6 is repeated to perform scan corresponding to one frame period of three-dimensional video display.

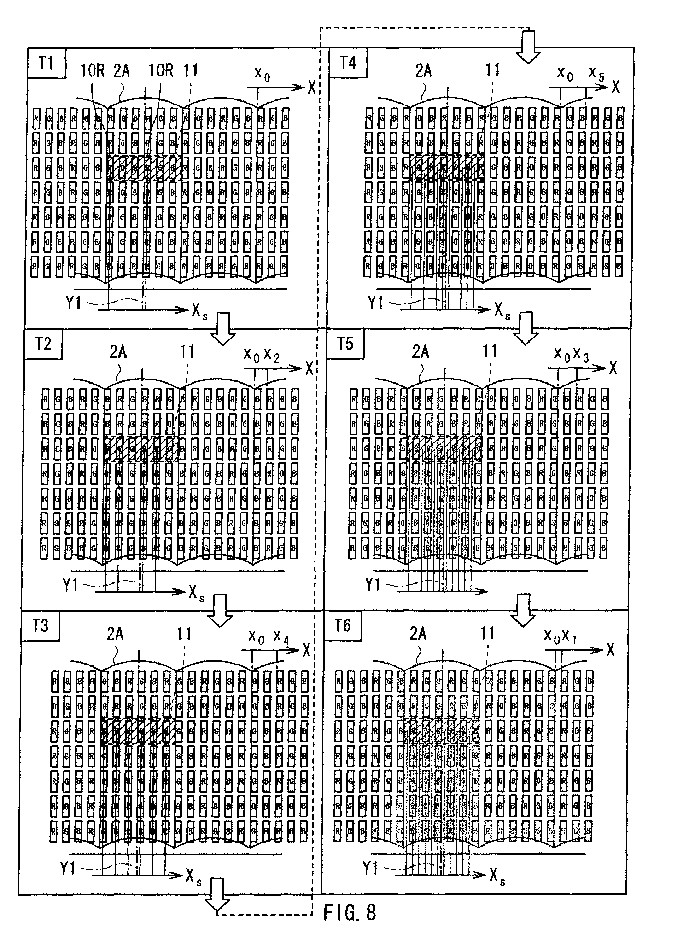

FIG. 8 shows a second operation example of relative movement (scan operation) the two-dimensional display section 1 and the lenticular lens 2. FIG. 9(B) shows a scan method for achieving the relative position timing shown in FIG. 8 in a time series. According to the embodiment, order of timing determined by the expression (1) is not particularly limited. Therefore, timing order is typically determined depending on a characteristic or convenience of a scan system. Since the above expressions show a relative positional relationship between the two-dimensional display section 1 and the lenticular lens 2, the two-dimensional display section 1 or the lenticular lens 2 may be actually moved.

In the operation example of FIGS. 6 and 9(A), scan operation is performed such that the relative position xi expressed by the expression (1) is sequentially displaced in order of x0, x1, ... and x5 in correspondence to order of timing T1, T2, ... and T6 during one frame period. On the other hand, in the operation example of FIGS. 8 and 9(B), scan operation is performed such that the relative position xi expressed by the expression (1) is irregularly displaced in order of x0, x2, x4, x5 and x1 in correspondence to order of timing T1, T2, T3, T4, T5 and T6 during one frame period.

Furthermore, FIG. 9(C) shows a third operation example of relative movement between the two-dimensional display section 1 and the lenticular lens 2. In the example of FIG. 9(C), scan operation is performed such that the relative position xi expressed by the expression (1) is sequentially displaced in order of x0, x1, ... and x5 in correspondence to order of timing T1, T2, ... and T6 during one frame period as in the operation example of FIGS. 6 and 9(A). In a subsequent frame period, scan operation is performed such that the relative position xi expressed by the expression (1) is sequentially displaced in order of x5, x4, ... and x0 in correspondence to order of timing T1, T2, ... and T6. Thereafter, the two kinds of scan operation are repeated.

As understood from FIGS. 9(A) to 9(C), when a certain time interval for displaying a spatial image displayed by a predetermined number of beams by the spatial image display apparatus, namely, one frame period of three-dimensional video display (three-dimensional frame interval) is denoted by t3D, a two-dimensional frame interval tr of the two-dimensional display section 1 (one frame period of two-dimensional video display) desirably satisfies a relationship of,

$$t3D = q*(m*tr) \text{ (q is an integer of 1 or more).}$$

In the embodiment, the total number g of two-dimensional images, which are time-divisionally displayed during one frame period of three-dimensional video display on the two-dimensional display section 1 in order to obtain the number v of beams (=M*m*p) or the number v of visual points, preferably satisfies the following relational expression:

$$g = m.$$

Hereinbefore, it has been described that in the spatial image display apparatus according to the embodiment, a timing to displace the relative position between the lenticular lens 2 and the two-dimensional display section 1 and a timing to display images in a time division manner from the two-dimensional display section 1 are appropriately controlled to be synchronized with each other, and wherefore a viewer may view a a spatial image with little unevenness in light intensity.

Next, it is described that the spatial image display apparatus according to the embodiment may suppress color shading.

To reproduce a desired color by using one three-dimensional pixel 11 according to the embodiment, it is necessary that pixels 10 of the colors R, G and B emit light with a predetermined quantity of light for each of the colors, and the emitted light arrives at a viewer while being mixed in color. A method of mixing colors of light from the respective color pixels 10 includes a method of allowing the color pixels 10 to emit light temporally in parallel for color mixture, and a method of allowing the color pixels 10 to emit light serially in a short time with a predetermined quantity of light and mixing colors using an integration effect of human eyes. In the embodiment, which largely uses the parallel and serial methods in a mixed manner, as a distinctive point for reproducing a desired color by mixing light from the respective color pixels 10 by using the three-dimensional pixel 11, when beams radiated from one three-dimensional pixel 11 in a predetermined deflection direction are focused, the beams need to be radiated with a predetermined quantity of light in a predetermined deflection direction equally from all kinds, R, G and B, of pixels 10 within the three-dimensional frame interval t3D described above.

According to the embodiment, when beams radiated from one three-dimensional pixel 11 in a predetermined deflection direction are focused, beams are radiated with a predetermined quantity of light in a predetermined deflection direction equally from all kinds, R, G and B, of pixels 10 within the three-dimensional frame interval t3D, so that color shading is suppressed.

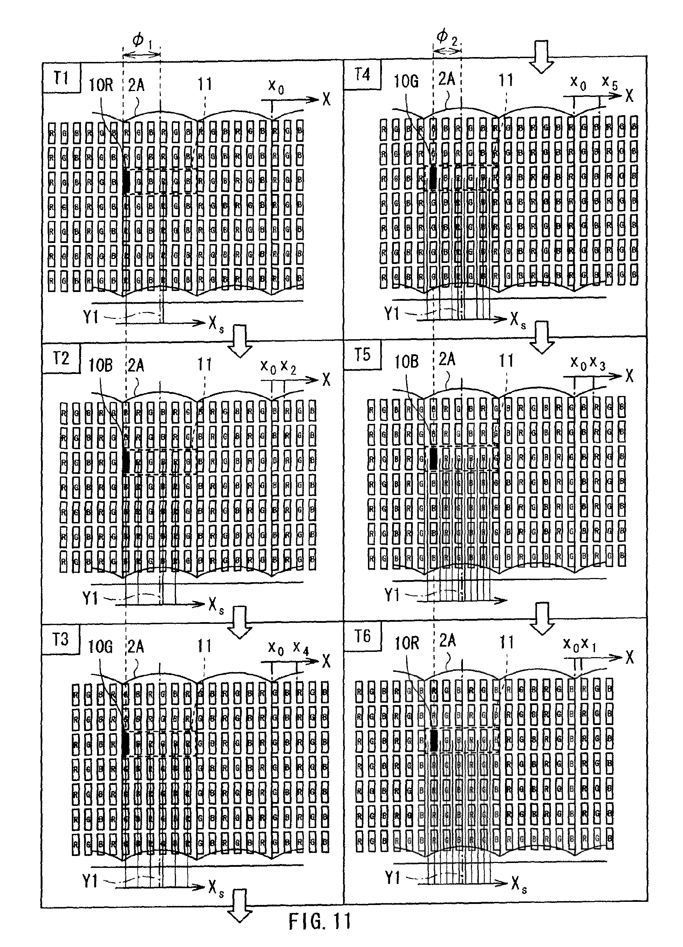

This is described with reference to FIG. 11. FIG. 11 is formed based on the operation example of FIGS. 8 and 9(B). When three kinds, R, G and B, of pixels 10 are assumed, it is enough that beams are radiated from all kinds, R, G and B, of pixels in a direction of a focused deflection angle with the three-dimensional frame interval t3D. For example, when a deflection angle φ1 shown in FIG. 11 is focused, beams are radiated from an R pixel 10R at timing T1 of scan configuring one three-dimensional frame, from a B pixel 10B at timing T2, and from a G pixel 10G at timing T3.

When another deflection angle φ2 is focused, beams are radiated frog a G pixel 10G at timing T4 of scan configuring one three-dimensional frame, from a B pixel 10B at timing T5, and from an R pixel 10R at timing T6.

As shown in the example, according to the embodiment, beams are radiated in a predetermined deflection direction equally from all kinds, R, G and B, of pixels 10 within a three-dimensional frame interval, Consequently, color shading may be suppressed.

Next, it is described that the spatial image display apparatus according to the embodiment may minimize a divergent angle of beams radiated from each color pixel 10 via the lenticular lens 2.

First, general and basic explanation is made to simplify description. If a pixel 10 is a point light source having no area, and the pixel 10 is accurately disposed at a focal point of a convex lens with no aberration, beams radiated from the pixel 10 via the lens become parallel beams having a divergent angle of zero, However, if the pixel 10 has a finite area, the divergent angle may not be to zero, and therefore beams having a finite divergent are radiated. The reason for this its as follows: when a pixel 10 having a finite area is assumed to be an infinite number of point light sources disposed in a pixel having a finite size, even if beams from each point light source is parallel light having a divergent angle of zero, a deflection angle at which beams are radiated from a lens varies depending on a position of each point light source. Since the pixel 10 as a whole is a crowd of such point light sources, beams radiated from the pixel 10 via a lens may be considered to be collection of parallel light having various deflection angles, and therefore beams having a finite divergent angle are radiated due to area of the pixel 10. A deflection angle of a point light source in a pixel 10 depends on a distance between the point light source and a focal point of a lens. In other words, as a point light source is more distant from a focal point of a lens, a deflection angle becomes larger Therefore, when pixel area is finite, as pixel area is larger, a divergent angle of beams radiated from the pixel 10 via a lens becomes larger.

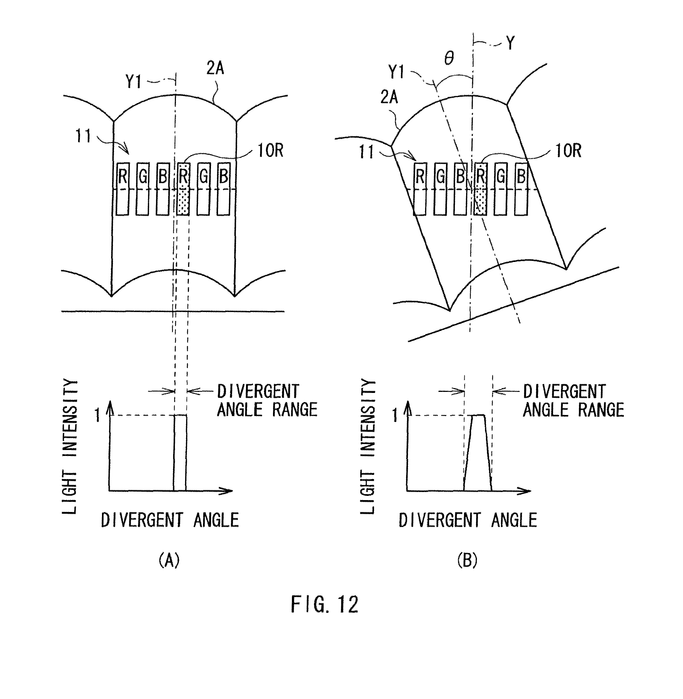

In the light of the above general principle, description is made using FIGS. 12(A) and 12(B) on a fact that the spatial image display apparatus according to the embodiment may minimize a divergent angle of beams radiated from a pixel 10 via the lenticular lens 2. Upper diagrams of FIGS, 12(A) and 12(B) show arrangement of pixels 10 (three-dimensional pixel 11) of the two-dimensional display section 1 and a layout of a corresponding lenticular lens 2, The upper diagram of FIG. 12A shows a layout of the lenticular lens in the spatial image display apparatus according to the embodiment. The upper diagram of FIG. 12B shows a layout in a configuration of a previous example, where the lenticular lens 2 is disposed such that the central axis (cylindrical axis) Y1 of the cylindrical lens 2A is inclined by an angle θ with respect to the vertical direction Y of the two-dimensional display section 1. In the spatial image display apparatus according to the embodiment, the lenticular lens 2 is disposed such that a direction of the central axis Y1 of each cylindrical lens 2A configuring the lenticular lens 2 is parallel to a central axis of a face of a viewer. It is assumed that a lenticular less 2 is selected, in which length in a horizontal direction of each three-dimensional pixel 11 is fixed, and a total divergent angle of beams from one three-dimensional pixel 11 is the same between both the layout examples as shown in the upper diagrams of FIGS. 12(A) and 12(B). In such a situation, one pixel, or one R pixel 10R herein, is focused, and divergent-angle dependence of light intensity of beams radiated from the R pixel 10R is shown in each of lower diagrams of FIGS. 12(A) and 12(B).

According to the spatial image display apparatus according to the embodiment, a divergent angle range of beams radiated from one R pixel 10R (lower diagram of FIG. 12(A)) is smaller than that in the example in the past (lower diagram of FIG. 12(B)). In other words, according to the embodiment, a divergent angle of beams radiated from a three-dimensional pixel 11 may be reduced. The spatial image display apparatus according to the embodiment displays an image in a space by using a large number of beams. Therefore, each beam needs to be thin and small in divergent angle in order to display a spatial image being less blurred. In this regard, according to the embodiment, since beams with a small divergent angle may be easily radiated, a spatial image being less blurred may be displayed. Moreover, in the spatial image display apparatus according to the embodiment, since a center line of each cylindrical lens 2A of the lenticular lens 2 is in a vertical direction with respect to a viewer, a visible range is widened in viewing in a vertical direction with respect to the apparatus. Even in viewing in the vertical direction, the layout of the lenticular lens 2 prevents a displayed image from being shifted in a horizontal direction by an effect of the lenticular less 2. This may expand a region whore a viewer may recognize a spatial image.

The reason why each cylindrical lens 2 has not been able to be vertically disposed in the past is briefly described. In the spatial image display apparatus according to the embodiment, the lenticular lens 2 is disposed such that a direction of the central axis Y1 of each cylindrical lens 2A is parallel to a central axis of a face of a viewer. This means that the direction of the central axis Y1 is the same as a direction, in which the same kind of pixels of a display are arranged, in a typical stripe-type two-dimensional display. The upper diagram of FIG. 12(B) shows a layout of a previous-type cylindrical lens, in which a direction of a central axis of each cylindrical lens 2A configuring the lenticular lens 2 is intentionally made different from a direction in which the same kind of pixels of a stripe-type two-dimensional display are arranged. Thus, a plurality of colors is mixedly seen in a vertical direction, leading to an achromatic effect. In other words, in a configuration of the upper diagram of FIG. 12(B), various colors are mixedly radiated in a direction of the same deflection angle from the lenticular lens 2, leading to an achromatic effect in the vertical direction. In the spatial image display apparatus according to the embodiment, the same color is given in the same deflection direction, and consequently the same color is seen in a line in the vertical direction. On the other hand, the lenticular lens 2 has an effect of visually enlarging pixel size like a typical magnifying glass. Therefore, if the spatial image display apparatus displays an image in this condition, vertical-striped lines having different colors are seen in lines. However, in the embodiment, a relative positional relationship between the lenticular lens 2 and the two-dimensional display is changed at high speed, so that colors are temporally mixed, and therefore the colored vertical-striped lines does not actually appear. In this way, according to the embodiment, the lenticular lens 2 may be placed in a layout that has not been able to be achieved in the past.

As described hereinbefore, according to the spatial image display apparatus of the embodiment, the lenticular lens 2A is disposed such that a longitudinal direction of each cylindrical lens 2A or a direction of a boundary between adjacent cylindrical lenses 2A is parallel to an axis in a vertical direction of pixel arrangement of the two-dimensional display section 1, and a plurality of beams corresponding to a plurality of view angles are radiated into a space by means of surface segmentation. Thus, while a divergent angle of beams radiated from one pixel is reduced compared with a case that each cylindrical lens 2A is obliquely disposed, a plurality of beams corresponding to a plurality of view angles may be radiated into a space by means of surface segmentation at a time, and consequently a spatial image being less blurred may be displayed. A relative positional relationship between each cylindrical lens 2A and each pixels 10 of the two-dimensional display section 1 is periodically changed, so that a radiation direction of display image light from one pixel 10 through each cylindrical lens 2A is periodically displaced, In addition, images corresponding to one frame of a three-dimensional video image are time-divisionally displayed for each pixel 10 of the two-dimensional display section 1, and timing of time division display of the two-dimensional display section 1 and a timing to displace a relative position by displacement means are controlled to be synchronized with each other. In other words, according to the spatial image display apparatus of the embodiment, stereoscopic display using a combination of the surface segmentation method and the time division method may be realized. Moreover, since the lenticular lens 2 or the two-dimensional display section 1 is wholly moved and thus time division display is achieved, synchronization control is easily performed, for example, compared with a case that synchronization control is independently performed to individual micromirrors of a micro deflection mirror array in a time division manner. Thus, stereoscopic display with high definition compared with in the past may be easily realized. Furthermore, appropriate synchronization control is performed so as to satisfy a predetermined relational expression, and therefore unevenness in intensity of brightness and color shading of a spatial image may be suppressed, leading to excellent spatial image display.

According to the spatial image display apparatus of the embodiment, while the display surface 1A of the two-dimensional display section 1 is kept parallel to the lenticular lens 2, the lenticular lens 2 and the two-dimensional display section 1 are relatively finely translated right and left. Thus, the number of beams radiated from the spatial image display apparatus per unit time may be advantageously increased, so that a viewer adjusts the focus of its eyes more easily on a three-dimensionally displayed, spatial image than on the display surface 1A of the two-dimensional display section 1. Thus, inconsistency between convergence and focus adjustment is easily solved, and consequently a more natural spatial image may be viewed.

## Claims

1.  A spatial image display apparatus comprising:

    a two-dimensional display section having a plurality of pixels of p kinds of colors (p is an integer of 1 or more) which are two-dimensionally arranged on a lattice in vertical and horizontal directions so as to form a planar display surface, pixels of an identical color being arranged in the vertical direction, and pixels of the p kinds of colors cyclically arranged in the horizontal direction so that pixels of an identical color are arranged at regular intervals;
    a lenticular lens including a plurality of cylindrical lenses disposed side by side so that the cylindrical lens as a whole is configured into a sheet shape and is disposed facing the display surface of the two-dimensional display section, the cylindrical lenses allowing display image light, which comes from each pixel of the two-dimensional display section, to be deflected and radiated into a space;
    displacement means reciprocating to displace one or both of the lenticular lens and the two-dimensional display section in a plane parallel to the display surface so as to periodically change a relative positional relationship between each of the cylindrical lenses and each of the pixels of the two-dimensional display section, and thereby periodically changing a radiation direction of display image light from one pixel through each of the cylindrical lenses; and
    control means performing control of allowing the two-dimensional display section to display images corresponding to one frame of three-dimensional video image in a time-division manner, and performing control of synchronizing a time-division display timing in the two-dimensional display section with a timing to change the relative positional relationship by the displacement means,
    wherein the lenticular lens is disposed such that a longitudinal direction of each of the cylindrical lenses or a direction of a boundary between the cylindrical lenses adjacent to each other is parallel to an axis in the vertical direction of the two-dimensional display section.

2.  The spatial image display apparatus according to claim 1, wherein

when a pixel group of p*M (M is an integer of 1 or more) pixels including one pixel in the vertical direction and p*M pixels in the horizontal direction of the two-dimensional display section is assumed as "three-dimensional pixel", a relational expression of 'ν=M*=m*p' is satisfied, where ν is the number of beams radiated from one three-dimensional pixel mentioned above in radiation directions different from one another during one frame period of three-dimensional video display, that is, ν is the number of viewpoints formed by one three-dimensional pixel mentioned above during one frame period of three-dimensional video display, and m is an integer of 1 or more.

3. The spatial image display apparatus according to claim 2, wherein a relational expression of 'ν0=M*p' is satisfied, where v0 is the number of beams radiated from one three-dimensional pixel mentioned above in radiation directions different from one another at a time.

4. The spatial image display apparatus according to claim 2, wherein a relational expression of 'g=m' is satisfied, where g is the total number of images to be time-divisionally displayed on the two-dimensional display section during one frame period of three-dimensional video display, which allowing the number of beams or the number of the viewpoints to be v.

5. The spatial image display apparatus according to claim 1 or 2, wherein a pitch pr in the horizontal direction of each of the cylindrical lenses of the lenticular lens preferably has a value which satisfies a relational expression of 'pr=p*px*M' where px is a pixel pitch for each color in the horizontal direction of the two-dimensional display section.

6. The spatial image display apparatus according to claim 1 or 2, wherein the displacement means reciprocates the lenticular lens or the two-dimensional display section in a direction parallel to the horizontal direction of the two-dimensional display section, the control means displaces a relative position xi between each of the cylindrical lenses and each of the pixels of the two-dimensional display section, according to following relational expression (1),

$$xi=a0*i+x0, \quad a0=px/m \quad : \quad (1)$$

where px is a pixel pitch for each color in the horizontal direction of the two-dimensional display section, x0 is a relative reference position between the lenticular lens and the two-dimensional display section, i is 0 to mp-1, and m is an integer of 1 or more, and the control means performs control of synchronizing timing of time division display of the two-dimensional display section with timing of displacing the relative position according to the relational expression (1).

7. The spatial image display apparatus according to claim 2, wherein a relationship of 't3D=q*(m*tr)' is satisfied, where tr is one frame period of two-dimensional video display (i.e., two-dimensional frame interval), t3D is one frame period of three-dimensional video display (i.e., three-dimensional frame interval) for displaying the number v of beams, and q is an integer of 1 or more.

FIG. 1

$$X' = L \cdot \tan \phi$$

$$= L \cdot \frac{x_S}{f}$$

$$= \frac{L}{f} \cdot x_S$$

FIG. 2

VIDEO
SIGNAL

TIME-DIVISIONAL
VIDEO SIGNAL

VIDEO SIGNAL
PROCESSOR ~30

VIDEO
MEMORY ~32

X DRIVER ~33

TIMING
CONTROLLER ~31

Y
DRIVER

34

11

21

2

1

S1

2A

PIEZOELECTRIC
ELEMENT CONTROLLER ~35

FIG. 3

~4

FIG. 4

EP 2 296 029 A1

$$p_r = p \cdot p_X \cdot M$$

FIG. 5

p=3 : (R, G, B)

M=2

FIG. 6

FIG. 7

THE NUMBER OF BEAMS : $\nu = M \cdot m \cdot p$

$$\Delta x_W = \frac{x_W}{M \cdot m \cdot p - 1}$$

M=2

FIG. 8

FIG. 9

FIG. 10

FIG. 11

EP 2 296 029 A1

FIG. 12

24

FIG. 13

## INTERNATIONAL SEARCH REPORT

| International application No. |
| --- |
| PCT/JP2009/061183 |

**A. CLASSIFICATION OF SUBJECT MATTER**
*G02B27/22*(2006.01)i, *H04N13/04*(2006.01)i

According to International Patent Classification (IPC) or to both national classification and IPC

**B. FIELDS SEARCHED**

Minimum documentation searched (classification system followed by classification symbols)
G02B27/22, H04N13/04

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2007-72217 A  (Hunet Inc.), 22 March, 2007 (22.03.07), Par. Nos. [0061] to [0079]; Figs. 7, 8 (Family: none) | 1-7 |
| A | JP 2008-58583 A  (Matsushita Electric Industrial Co., Ltd.), 13 March, 2008 (13.03.08), Claim 1 & US 2007/0146845 A1 | 1-7 |
| A | JP 2007-3887 A  (Canon Inc.), 11 January, 2007 (11.01.07), Full text; all drawings (Family: none) | 1-7 |

☒ Further documents are listed in the continuation of Box C.          ☐ See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 03 July, 2009 (03.07.09) | 14 July, 2009 (14.07.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

26

**INTERNATIONAL SEARCH REPORT**

| International application No. |
|---|
| PCT/JP2009/061183 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-223727 A  (Ricoh Co., Ltd.),<br>18 August, 2005 (18.08.05),<br>Claims 1, 2<br>& US 2004/0263968 A1 | 1-7 |
| A | JP 9-318911 A  (Canon Inc.),<br>12 December, 1997 (12.12.97),<br>Full text; all drawings<br>& US 6061179 A | 1-7 |
| A | JP 2007-33654 A  (Canon Inc.),<br>08 February, 2007 (08.02.07),<br>Full text; all drawings<br>& US 2007/0019067 A1 | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6064424 A

- JP 2005309374 A

**Non-patent literature cited in the description**

- **Yuzo Hirayama.** Flatbed-Type Autostereoscopic Display System. *KOGAKU,* 2006, vol. 35, 416-422

- **Y. Takaki.** Density Directional Display for Generating Natural Three-dimensional Images. *Proc. IEEE,* 2006, vol. 94, 654-663